# EUROPÄISCHE PATENTSCHRIFT

(11) **EP 0 305 338 B1**
(45) Veröffentlichungstag und Bekanntmachung des Hinweises auf die Patenterteilung: **03.02.1993**
(21) Anmeldenummer: 88810590.5
(22) Anmeldetag: 26.08.1988
(51) Int. Cl.: H02G 3/04

(54) **Bausatz und dessen Verwendung zur Herstellung von Kanälen und Kasten für die Haustechnik**
Kit of parts and its utilization for constructing channels and boxes in buildings
Ensemble de pièces et son utilisation pour la construction de conduits et de boîtiers dans un immeuble

(30) Priorität: 28.08.1987 CH 3326/87
(43) Veröffentlichungstag der Anmeldung: 01.03.1989
(73) Patentinhaber: Gantenbein, Ulrich, 9472 Grabs (CH)
(72) Erfinder: Gantenbein, Ulrich, 9472 Grabs (CH)
(74) Vertreter: Riederer, Conrad A., Dr.

(56) Entgegenhaltungen:
- EP-A- 0 161 226
- US-A- 3 814 833

## Beschreibung

Die Erfindung betrifft einen Bausatz un dessen Verwendung zur Herstellung von Kanälen und Kästen für die Haustechnik.

Die Entwicklung der Automation, der Telekommunikation und der Datenverarbeitung stellt immer höhere Anforderungen an die Installationstechnik. Von besonderer Bedeutung ist die emV (elektromagnetische Verträglichkeit) der verschiedenen Systeme. So muss ausgeschlossen werden, dass irgendwelche Spannungsstösse in den Starkstromkabeln oder Stromschienen Auswirkungen auf die Telekommunikationskabel haben. Es wird daher eine getrennte Führung der verschiedenen Starkstrom-, Schwachstrom- und Telekommunikationskabel verlangt. Auch äussere Einflüsse, z.B. von Kernspeichern von Computern erzeugte Magnetfelder, sollten nicht irgendwelche Auswirkungen auf nahegelegene Kabel besitzen. Aus diesen Gründen ist man schon seit längerer Zeit dazu übergegangen, Kabel in Kabelkanälen zu führen, die aus verzinktem Eisenblech bestehen. Diese bekannten Kabelkanäle vermögen aber nicht den üblichen Anforderungen zu genügen. Ihre Montage ist meist schwierig und zeitraubend. Des weiteren ist auch der Platzbedarf für Kabelkanäle, Verteilerkästen, Sicherungskästen und dergleichen in modernen Bürogebäuden, Fabrikationsgebäuden und grossen Wohnhäusern unverhältnismässig gross. Dies ergibt besondere Probleme bei der Sanierung von Altbauten, weil dort meist wenig Platz zur Verfügung steht.

Die US-A-3 814 833 zeigt einen U-förmigen Leitungskanal zur Aufnahme von Starkstrom- und Signalleitungen. In die Oeffnung des U-Profils sind Instrumenten-, Steuer- und Verteilkästen eingesetzt. Im unteren Teil befindet sich eine Fussleuchte und vom oberen Teil zweigen horizontal verlaufende Leitungen ab. Soweit sich keine Kästen in der Oeffnung des U-Profils befinden, ist die Oeffnung durch Deckplatten verschlossen. Dieser Steigleitungskanal wird aber durch ein Abschlussstück aus Holz oder Kunststoff abgeschlossen, das bei der Montage entsprechend der Höhe des Raums abgelängt wird.

Die EP-O-161 226 betrifft einen waagrechten Installationskanal für elektrische Kabel, Telefon- und Computerkabel. Dieser Installationskanal besteht aus einem komplizierten Aluminiumprofil, welches die Grundform eines um 90 Grad gedrehten U aufweist. Auf dem unteren und auf dem oberen Schenkel des U sind nach oben offene Kompartimente vorgesehen, in welche die verschiedenen Kabel eingelegt werden können. Zwischen den Schenkeln des U befindet sich Raum zur Aufnahme von elektrischen Anschlussdosen, Computeranschlussdosen und anderen Anschlussmitteln. Die Oeffnung des U-Profils ist durch einen Deckel verschliessbar. Ein Deckel ist auch für die Kompartimente auf dem oberen Schenkel des um 90 Grad gedrehten U vorgesehen. Dieser Installationskanal ist nicht für eine senkrechte Anordnung als Steigleitungskanal bestimmt und dazu auch praktisch nicht verwendbar.

Es ist Aufgabe der vorliegenden Erfindung, die genannten Nachteile zu vermeiden. Insbesondere soll ein Kanalsystem geschaffen werden, das leicht und rasch montiert werden kann. Es soll auch eine saubere Trennung der Kabel für die verschiedenen Zwecke möglich sein. Die Lösung einer oder mehrerer dieser Aufgaben gelingt mit einem Bausatz gemäss Anspruch 1 bzw. die Verwendung eines solchen Bausatzes gemäss Anspruch 23. Dieser Bausatz ermöglicht die Montage eines Kanals oder Kastens, ohne dass Anpassungsarbeiten vorgenommen werden müssten, denn das teleskopisch verschiebbare Teilstück gestattet Abweichungen der Bauten vom Sollmass problemlos auszugleichen.

Zweckmässigerweise weist der Bausatz Kästen, z.B. Verteilerkästen zum Einsetzen in die Oeffnung des U auf. Diese Ausgestaltung ermöglicht es, Installationsänderungen mit einem minimalen Aufwand vorzunehmen, indem z.B. eine Deckplatte weggenommen und ein Verteilerkasten eingesetzt wird.

Zweckmässigerweise sind zur Montage im Innern des U-förmigen Profils separate Unterkanäle für Starkstrom, Telekommunikation und Schwachstrom vorgesehen. Dadurch wird eine saubere Führung der Kabel in ausreichendem Abstand voneinander ermöglicht, so dass sie sich praktisch nicht gegenseitig beeinflussen können. Die Führung erfolgt zweckmässigerweise so, dass der Unterkanal oder die Unterkanäle für Starkstrom am Boden des U-förmigen Profils und der Unterkanal oder die Unterkanäle für Telekommunikation und Schwachstrom an den Schenkeln des U-förmigen Profils angeordnet sind. Dies gewährleistet auf kleinem Raum eine getrennte Führung der Starkstrom-, Telekommunikations- und Schwachstromkabel. Es herrscht also eine Ordnungstrennung, d.h. die einzelnen Kabelgruppen, z.B. für Starkstrom und für Telefon, werden zwangsläufig voneinander beabstandet und getrennt voneinander geführt.

Zweckmässigerweise ist der jeweilige Kasten, z.B. Verteilerkasten, so bemessen, dass er auf drei Seiten von den Unterkanälen umgeben ist. Dadurch wird eine sehr platzsparende Installation erreicht. Es ist nicht mehr nötig, solche Kästen ausserhalb des Kanals anzuordnen.

Vorteilhaft sind die Enden der Schenkel des U-förmigen Profils nach innen abgewinkelt, um einen Befestigungsflansch für die Kästen und Deckel zu bilden. Dies ergibt eine besonders einfache und zweckmässige Konstruktion. Der Befestigungsflansch kann mit in genormten Abständen, z.B. 30 mm, voneinander angeordneten Befestigungslöchern versehen sein. Dies ermöglicht es, den heutigen Normen entsprechende Verteilerkästen zu verwenden.

Zweckmässigerweise bestehen die Teilstücke und/oder die Unterkanäle aus Metallblech, z.B. verzinktem Eisenblech oder aus Aluminiumblech. Dadurch wird die elektromagnetische Verträglichkeit gewährleistet.

Es ist möglich, den Kanal aus genormten Teilstücken herzustellen. Dies ermöglicht es, die Montage in kurzer Zeit durchzuführen. Die Verwendung von genormten Teilstücken hat den Vorteil, dass lange Lieferzeiten und aufwendige Anpassungsarbeiten entfallen.

Vorteilhaft wird vorgesehen, dass ein relativ langes Teilstück als Basisstück dient, dass gegebenenfalls über dem Basisstück ein oder mehrere Teilstücke als Ergänzungsstücke angeordnet sind und dass als weiteres Teilstück ein Deckenanschlussstück mit einem Flansch zur Befestigung an der Decke vorgesehen ist, wobei das Deckenanschlussstück teleskopisch in das darunter angeordnete Teilstück eingreift. Die teleskopische Anordnung von zwei Teilstücken ermöglicht es, allen Raumdimensionen mit einer relativ kleinen Anzahl von verschiedenen Teilstücklängen gerecht zu werden. Auch können gewisse Abweichungen vom Sollmass der Bauten problemlos aufgefangen werden. Es spielt also keine Rolle, ob eine geplante Decke einige Zentimeter höher oder tiefer zu liegen kommt.

Das Deckenanschlussstück weist vorteilhaft eine Kabeldurchschlauföffnung auf, die zum Teil durch einen Abgangskanal und zum Teil durch einen Deckel verschliessbar ist. Die Kabeldurchschlauföffnung kann relativ gross bemessen werden, was die Schlaufarbeiten erheblich erleichtert. Der wegnehmbare Deckel erlaubt auch später Installationsänderungen ohne Probleme.

Vorteilhaft ist mindestens ein Teilstück als Durchführungsstück für die Deckendurchführung ausgebildet und weist die Form eines rechteckigen Rohrs auf. Ein solches Teilstück kann bereits vor dem Giessen der Betondecke auf der Schalung plaziert werden.

Zweckmässigerweise weist das Durchführungsstück auf einer Seite eine Oeffnung zur Verbindung mit einem in die Decke einbaubaren Schlaufkasten auf. Dies ermöglicht es, bereits vor dem Giessen der Betondecke sowohl das Durchführungsstück als auch den Schlaufkasten auf der Schalung zu plazieren. Dabei ist es vorteilhaft, wenn das Durchführungsstück und/oder der Schlaufkasten einen wegnehmbaren Kern aus Schaumkunststoff aufweisen. Durch diesen Kern wird den genannten Teilen die nötige Stabilität gegeben, die zur Aufnahme der beim Betonieren auftretenden Kräfte notwendig ist, um eine Verformung zu vermeiden. Der Kern des Schlaufkastens kann Löcher zum Einführen der Leitungsrohre aufweisen. Dies ermöglicht es, die Leitungsrohre vor dem Giessen der Betondecke sauber zu plazieren und in ihrer Stellung festzuhalten. Nach der Entfernung des Schaumstoffkerns liegen dann die Leitungsrohre am gewünschten Ort sauber beabstandet nebeneinander, was die Schlaufarbeiten erheblich erleichtert.

Ausführungsbeispiele der Erfindung werden nun unter Bezugnahme auf die Zeichnung beschrieben. Es zeigt:
- Fig. 1: eine perspektivische Darstellung der Verwendung des Kanalsystems als Steigleitungskanal,
- Fig. 2: eine Ausführungsform einer Verbindung zwischen zwei Teilstücken des Kanals,
- Fig. 3: eine Ansicht des U-förmigen Profils von vorn, wobei das Lochraster und die Bereiche für verschiedene Kästen sichtbar sind, die beispielsweise der Starkstromverteilung, der Telekommunikation und der Schwachstromverteilung dienen,
- Fig. 4: einen Querschnitt durch den Kanal mit Einbaukasten in Explosivdarstellung,
- Fig. 5: eine Deckenuntersicht mit Deckenanschlussstück und Abgangskanal,
- Fig. 6: eine Ansicht des Deckenanschlussstücks von Figur 5 von vorn, wobei am Boden des Anschlusskanals angebrachte Kabeldurchschlauföffnungen sichtbar sind,
- Fig. 7: eine perspektivische Darstellung der Ausgestaltung der Deckendurchführung mit einem Deckenschlaufkasten,
- Fig. 8: ein weiteres Ausführungsbeispiel einer Deckendurchführung mit Sockel,
- Fig. 9: ein Beispiel für eine Deckendurchführung mit Bohrungen für die Kabel bei Altbauten,
- Fig. 10: die Verwendung der Kanalprofile als Verteilschränke und Steigleitungen für verschiedene Gebiete der Haustechnik,
- Fig. 11: einen Horizontalschnitt durch die Verteilschränke von Fig. 10.

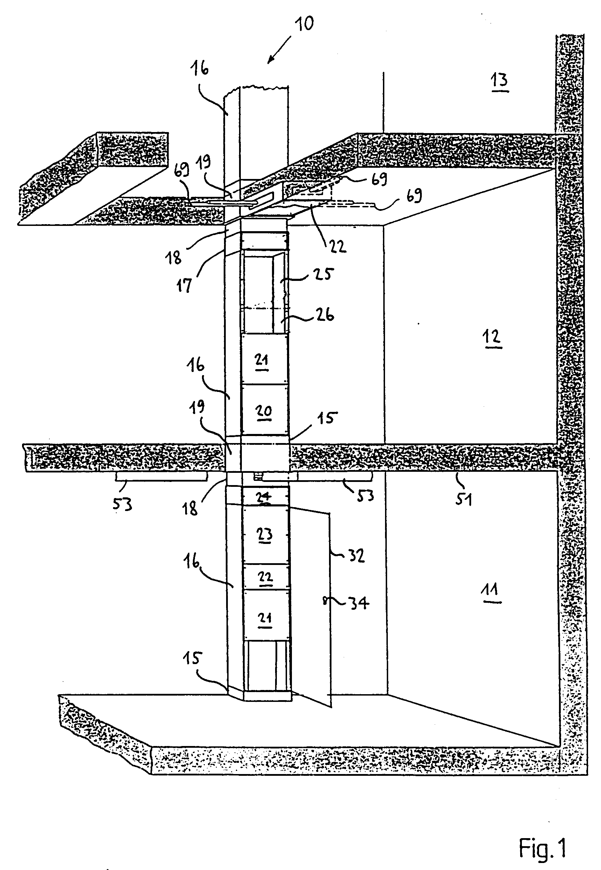

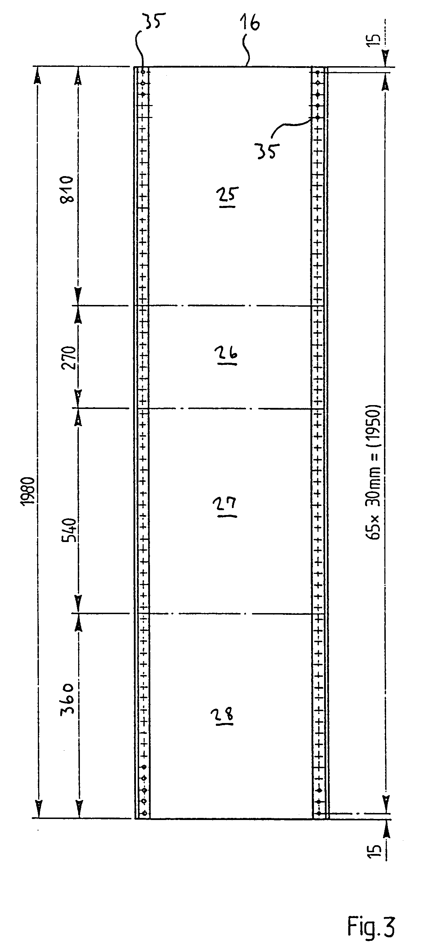

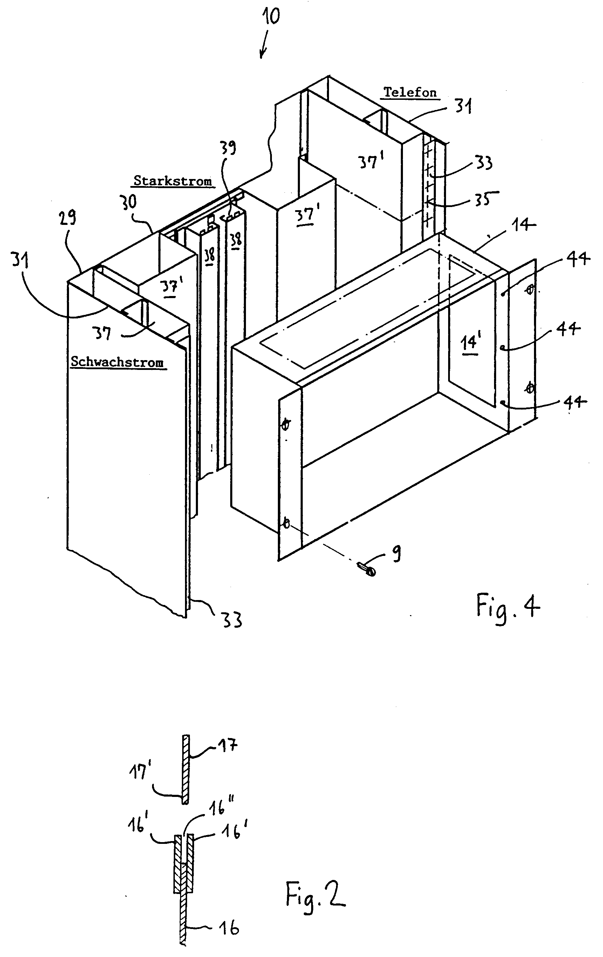

Figur 1 zeigt einen Steigleitungskanal 10. Der Steigleitungskanal 10 kann auch freistehend angeordnet werden. Freistehend im Raum könnten auch Steigleitungskanäle Rücken an Rücken plaziert werden. Der in Fig. 1 gezeigte Kanal führt beispielsweise vom Untergeschoss 11 zum Erdgeschoss 12 und zum ersten Obergeschoss 13. Der Steigleitungskanal 10 könnte aber zu beliebig vielen weiteren Geschossen führen. Es wäre auch möglich, den Kanal waagrecht anzuordnen. Der Steigleitungskanal besteht aus beliebig vielen Teilstücken 16 bis 19. Diese Teilstücke 16 bis 19 weisen vorteilhaft verschiedene Normlängen auf, wobei aus einem Bausatz von einigen Teilstücken 16 bis 19 jeweils die für die betreffende Geschosshöhe notwendige Kanallänge zusammengestellt werden kann. Es sind somit auf dem Bau keine Anpassungsarbeiten an den Kanalstücken notwendig, so dass die Montage sehr rasch durchgeführt werden kann. Die Teilstücke 16 bis 19 werden später noch näher beschrieben. Zur Erläuterung von Figur 1 genügt vorläufig eine Beschreibung der Funktion der einzelnen Teilstücke.

Teilstück 16 dient als Basisstück. Es ruht auf einem Sockel 15, der beispielsweise aus Aluminium besteht. Das Basisstück 16 besitzt vorteilhaft die grösste Länge aller Teilstücke, z.B. 1980 mm. Auf diesem Basisstück 16 ist beim Beispiel von Figur 1 ein einzelnes Ergänzungsstück 17 aufgesetzt. Bei grösserer Raumhöhe sind mehrere Ergänzungsstücke 17 notwendig. Basisstück 16 und Ergänzungsstücke 17 sind grundsätzlich gleich ausgebildet. Teilstück 18 dient als Anschlussstück, im vorliegenden Fall als Deckenanschlussstück. Teilstück 19 dient als Durchführung, im vorliegenden Fall als Deckendurchführung. Die Verbindung der Teilstücke 16 und 17 kann beispielsweise mit einer Verbindung gemäss Figur 2 erfolgen. Am Teilstück 16 sind z.B. durch Nieten oder durch Punktschweissen Blechstreifen 16′ befestigt, wobei zwischen zwei dieser Streifen 16′ ein Spalt 16˝ entsteht, in welchen der untere Rand 17′ des Teilstücks 17 eingeschoben werden kann. Vorteilhaft werden aber alle Teilstücke an den Verbindungsstellen miteinander vernietet, so dass sie sicher auch metallisch, d.h. elektrisch leitend miteinander verbunden sind. Dadurch wird auch Blitzschutz gewährleistet.

Die Teilstücke 16 und 17 des Steigleitungskanals haben ein U-förmiges Profil. In die Oeffnung des U können Kästen 14 (Figur 4), z.B. Verteilerkästen, eingesetzt werden. Die Verteilerkästen 14 des Kanals können mit Türen 21 bis 23 abgeschlossen werden. Mit den Bezugsziffern 20, 24 sind Deckplatten bezeichnet. Ferner kann auch zusätzlich oder anstelle der Türen 21 bis 23 und der Deckplatte 20 eine grosse Türe 32 vorgesehen werden, welche praktisch die ganze Frontseite abdeckt und vorteilhaft ein Schloss 34 aufweist, welches Unberechtigten den Zugang verwehrt. Die Türe 32 ist links oder rechts montierbar.

Die beschriebene Ausgestaltung des Kanals 10 ermöglicht es, Installationsänderungen mit einem minimalen Aufwand vorzunehmen, indem z.B. eine Deckplatte 21 entfernt und ein zusätzlicher Verteilerkasten 14 eingesetzt wird.

Figur 3 zeigt das Basisstück 16. Sichtbar ist eine geplante Einteilung in verschiedene Bereiche 25 bis 28. Der Bereich 25 dient beispielsweise dem Einbau eines Starkstrom-Sicherungsverteilers, der Bereich 26 dem Einbau eines Telefon-Zwischenverteilers und der Bereich 27 dem Einbau eines Schwachstrom-Zwischenverteilers Diese Kästen 14 können ebenfalls verschiedene Normlängen aufweisen.

Figur 4 zeigt einen Ausschnitt aus einem Basisstück 16. Die Teilstücke 16 oder 17 weisen ein U-förmiges Profil 29 auf. Vom Boden 30 dieses Profils 29 erstrecken sich die Profilschenkel 31. Diese sind nach innen abgewinkelt, um die Befestigungsflansche 33 für die Kästen 14 und die Deckel 20 und 24 zu bilden. Die Befestigungsflansche 22 weisen in genormten Abständen von z.B. 30 mm voneinander angeordnete Befestigungslöcher 35 auf, wie dies insbesondere aus Figur 3 ersichtlich ist.

Wie Figur 4 ferner zeigt, sind im Kanal 10 Unterkanäle 37, 38 angeordnet. Sie dienen der separaten Führung von Starkstrom-, Telekommunikations- und Schwachstromkabeln. Beim gezeigten Ausführungsbeispiel ist der Unterkanal 38 zur Aufnahme von Stromschienen 39 zu den Starkstromverteilern in den einzelnen Stockwerken 11, 12, 13 usw. vorgesehen. Die Unterkanäle 37′ am Boden 30 des Profils dienen der Führung von Starkstromkabeln, die Unterkanäle 37 des einen Schenkels 31 der Führung der Telefonkabel und die Unterkanäle 37' des anderen Schenkels 31 zur Führung der Schwachstromkabel.

Die Teilstücke 16 bis 19 bestehen aus Metallblech, z.B. verzinktem Eisenblech. Auch die Unterkanäle 37, 37′, 38 bestehen vorteilhaft aus Metallblech, z.B. verzinktem Eisenblech. Dies gewährleistet die elektromagnetische Verträglichkeit. Für gewisse Anwendungen empfiehlt sich die Verwendung von Aluminiumblech. Als Korrosionsschutz für das Blech und eine gefällige Oberflächengestaltung könnte auch eine Kunststoffbeschichtung dienen.

Wie Figur 4 zeigt, weist der Kasten 14 eine seitliche Oeffnung 14′ auf, die sich vorteilhaft zum Einschlaufen von Kabeln aus dem gegenüberliegenden Unterkanal 37 eignet. Es wäre aber auch möglich, die Oeffnung 14′ anderswo vorzusehen, zweckmässigerweise immer dem Unterkanal 37, 38 gegenüberliegend, aus dem Kabel in den Kasten 14 eingeschlauft werden müssen. Die Befestigung der Kästen 14 und der Deckel 20 und 24 erfolgt mittels Schrauben 9. Die Türen für die Einbaukasten sind links oder rechts mit einem Scharnier an die Einbaukasten befestigt. Mit der Bezugsziffer 44 sind die Löcher für die Befestigung der Scharniere bezeichnet.

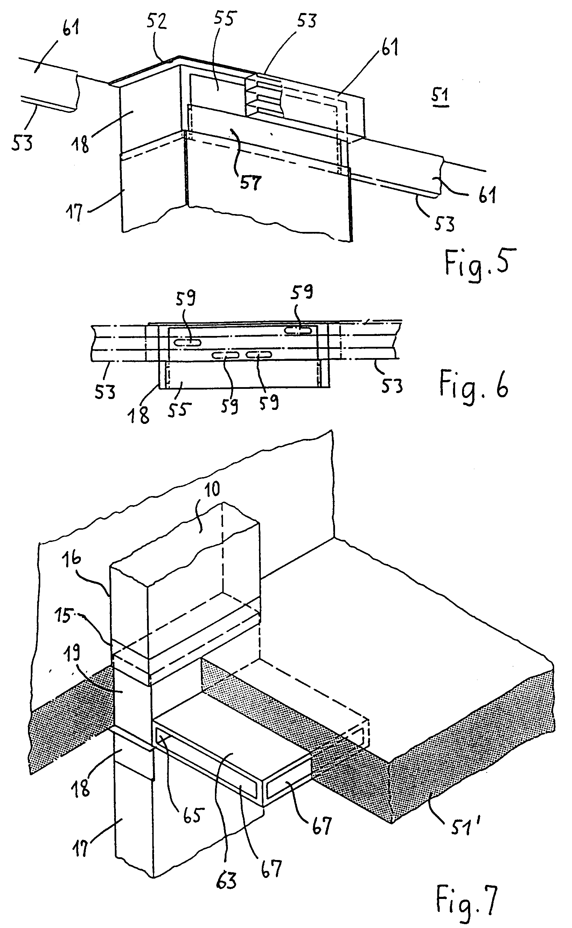

Figur 5 zeigt die nähere Ausgestaltung des Anschlussstücks 18. Ebenfalls sichtbar ist der Abgangskanal 53. Das Anschlussstück 18 besitzt einen Flansch 52 zur Befestigung an der Decke 51. Wichtig ist nun, dass das Anschlussstück 18 in Bezug auf das Ergänzungsstück 17 verschiebbar ist. Es ist möglich, die Längen der benötigten Teilstücke bereits bei der Planung festzulegen, wobei dann gewisse Abweichungen der Deckenhöhe vom Sollmass dank der teleskopischen Verschiebbarkeit der Teilstücke 17 und 18 aufgefangen werden können.

Das Anschlussstück 18 weist vorn eine Oeffnung 55 auf, die teilweise mit einem Deckel 57 verschlossen werden kann. Dieser Deckel 57 reicht bis zum Abgangskanal 53. Die Oeffnung 55 wird also vom Abgangskanal 53 und dem Deckel 57 sauber verschlossen. Der Abgangskanal 53 kann von bekannter Bauart sein und ist mit einem Deckel 61 abgedeckt.

Wie Figur 6 zeigt, können am Boden des Abgangskanals 53 Kabeldurchgangsöffnungen 59 vorgesehen werden, welche mit der Oeffnung 55 kommunizieren. Die Schlaufarbeiten sind dank der grossen Oeffnung 55 sehr leicht durchzuführen. Figur 7 zeigt ein Durchführungsstück 19 bei seiner Anwendung als Deckenführungsstück. Das Durchführungsstück 19 hat die Form eines rechteckigen Rohrs. Die Unterkanäle sind durch das Durchführungsstück 19 hindurchgeführt. Da mindestens aus dem oberen Teil des Durchführungsstücks 19 keine Leitungen herausgeführt werden müssen, wird dort eine feuersichere Abschottung vorgesehen. Diese füllt den ausserhalb der Unterkanäle verbleibenden Querschnitt aus. Figur 7 zeigt weiter einen Schlaufkasten 63. Wenn ein solcher Schlaufkasten 63 vorgesehen wird, weist das Durchführungsstück 19 auf der Seite des Schlaufkastens 63 eine Oeffnung 65 auf. Der Schlaufkasten 63 hat seinerseits vier seitliche Oeffnungen 67, von denen in der Zeichnung zwei gut sichtbar sind. Auch der Schlaufkasten 63 besteht vorteilhaft aus dem gleichen Material, z.B. verzinktem Eisenblech, wie die Teilstücke 16 bis 19 des Kanals 10. Ein Deckel, z.B. ein Deckel 21, wie er auch in Verbindung mit den Teilstücken 16 und 17 verwendet wird (Figur 1) kann auch als Deckel für den nach unten offenen Schlaufkasten 63 dienen. In einer Decke 51′ müssen vielfach Leitungsrohre 69 verlegt werden (Figur 1), wobei dann die in das Leitungsrohr eingeschlauften Leitungen in den Kanal 10 eingeschlauft werden müssen. Der Schlaufkasten 63 erleichtert dieses Einschlaufen in den Kanal 10 erheblich.

Das Durchführungsstück 19 und der Schlaufkasten 63 von Figur 7 werden vorteilhaft mit einem Kern aus steifem Schaumkunststoff, wie er z.B. unter Bezeichnung "Styropor" bekannt ist, geliefert. Sowohl das Durchführungsstück 19 als auch der Schlaufkasten 63 können dann vor dem Betonieren einer Decke auf der Deckenschalung plaziert werden. Die in die Betondecke einzugiessenden Leitungsrohre 69 werden in regelmässig beabstandeten Löchern in den Schaumstoffkern gesteckt. Diese Löcher können von Elektrikern nach Bedarf bei der Montage angebracht werden. Dadurch werden sie in der Lage festgelegt. Durch den Schaumstoffkern wird sowohl das Durchführungsstück 19 als auch der Schlaufkasten 63 beim Betonieren vor dem Eindringen des flüssigen Betons geschützt. Nach dem Abbinden des Betons kann dann der Kern leicht entfernt werden. Da die Leitungsrohre geordnet nebeneinander angeordnet sind, wird das Einschlaufen der Leitungen erheblich erleichtert.

Die Abmessungen des Durchführungsstücks 19 sind so gewählt, dass das Durchführungsstück 19 etwas länger ist als die übliche Deckenstärke. Das gleiche Durchführungsstück kann daher für verschiedene Deckenstärken Verwendung finden. Es steht dann lediglich etwas mehr oder weniger über die fertiggestellte Betondecke vor. Auf den vorstehenden Teil kann dann ein Sockel geschoben werden, der beispielsweise aus Aluminiumblech besteht und innen in einem vorbestimmten Abstand von der Unterseite des Sockels einen Absatz (in Figur 7 nicht sichtbar) aufweist, auf den dann ein Basisstück 16 gesetzt werden kann.

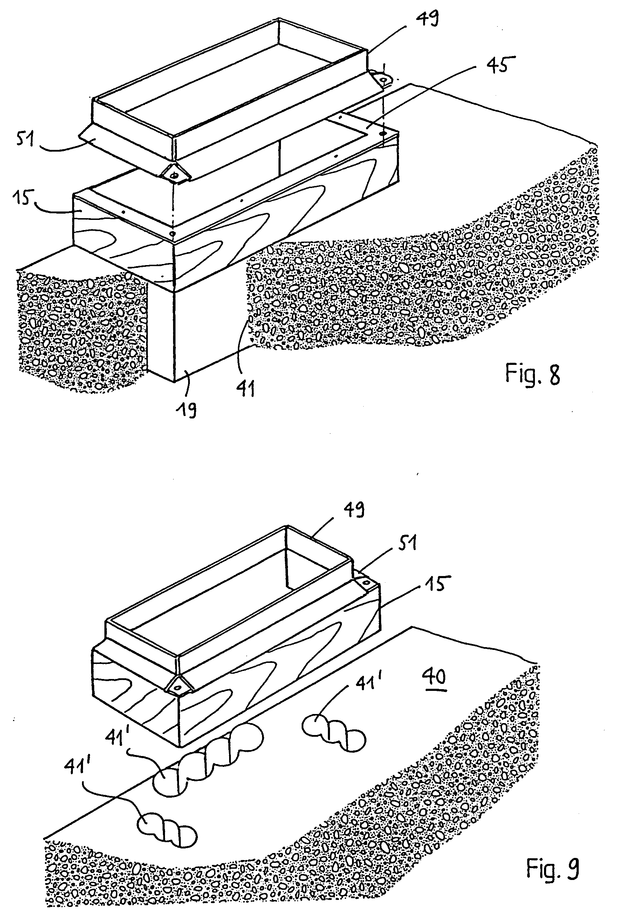

Figur 8 zeigt ein anderes Ausführungsbeispiel eines Durchführungsstücks 19 mit Sockel 15. Dieses Durchführungsstück 19 ist dazu bestimmt, bei Neubauten in eine in der Decke vorgesehene rechteckige Oeffnung 41 eingesetzt zu werden. Das Durchführungsstück 19 besitzt einen Flansch 45 und gegebenenfalls auch ein Sockelstück 15 aus Holz oder einem anderen geeigneten Material. Um den Steigleitungskanal weiterzuführen, ist über dem Flansch 45 ein Befestigungsstutzen 49 angeordnet, der einen Flansch 51 aufweist. Der Flansch 51 passt auf den Flansch 45. Auf den Befestigungsstutzen 49 kann dann das Basisstück 16 (Figur 1) gestülpt werden.

Wie Figur 9 zeigt, genügt es bei Altbauten, im Boden 40 Bohrungen 41′ zur Durchführung der Kabel vorzusehen. Es kann dann ein Befestigungsstutzen 49, der gegebenenfalls einen Sockel 15 aufweist, aufgesetzt werden. Zur Weiterführung des Steigleitungskanals wird dann über den Stutzen 49 das Basisstück 16 gestülpt.

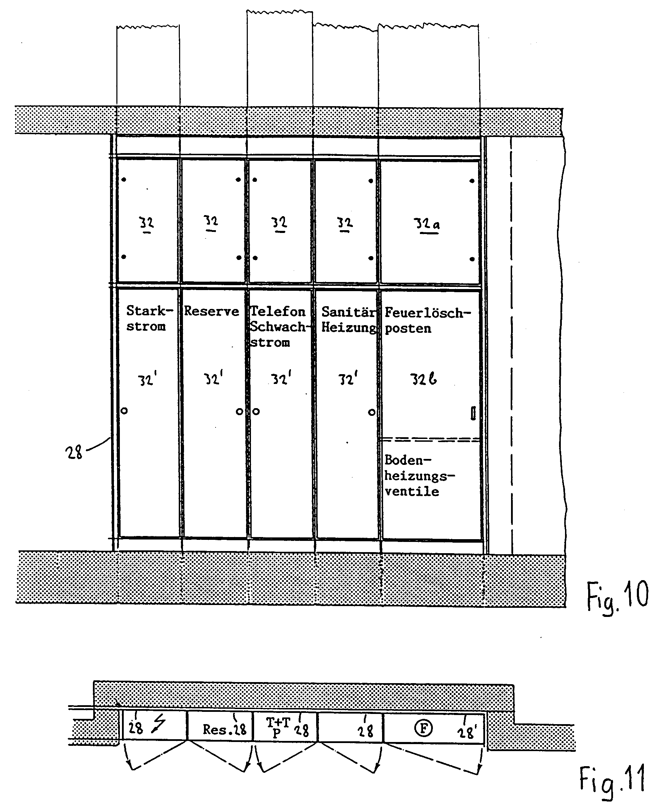

Wie die Figuren 10 und 11 zeigen, konnen die U-förmigen Profile 28 nicht nur als Kanal 10 sondern auch als Verteil-und/oder Sicherungskasten für Stark- und Schwachstrom, für Telekommunikation oder als Verteilkasten für andere Bereiche der Haustechnik, z.B. Sanitär, Heizung, Brandschutz, etc. dienen. Zu diesem Zweck sind Türen 32, 32′, 32a, 32b oder Deckplatten in die Profile 28 einsetzbar.

Abschliessend sei noch darauf hingewiesen, dass durch die metallische Verbindung zwischen den einzelnen U-Profilen, die z.B. auch als Nietverbindung ausgestaltet werden kann, Blitzschutz gewährleistet wird. Von Vorteil ist auch, dass die Montage bereits nach Erstellung des Rohbodens erfolgen kann. Daher kann Starkstromzuleitung definitiv verlegt werden und zur Einspeisung des Baustromverteilers benützt werden. Es ist daher kein Bauprovisoriumzuleitungskabel notwendig. Es entfallen somit die Erstellungs- und Abbruchkosten für das Bauprovisorium.

Von besonderer Bedeutung ist jedoch die Flexibilität der Installation, die saubere und übersichtliche Leitungsführung, die Möglichkeit der Verwendung als Verteilschrank, Sicherungskasten, Zählerschrank, usw. Da Anpassungsarbeiten weitgehend vermieden werden, ist eine rasche Beschaffung vom Lager und rasche Montage möglich.

## Patentansprüche

1. Bausatz zur Herstellung von Kanälen und Kästen für die Haustechnik, welcher Bausatz verschieden lange Teilstücke (16, 17) von U-förmigem Profil und mindestens eine Tür (37, 38, 39) und/oder eine Deckplatte (20, 24) zum Verschliessen der Öffnung des U aufweist und ein weiteres Teilstück (18) enthält, welches teleskopisch in ein Teilstück (16, 17) eingreifen kann.

2. Bausatz nach Anspruch 1, dadurch gekennzeichnet, dass Kästen (14), z.B. Verteilerkästen, zum Einsetzen in die Oeffnung des U vorgesehen sind.

3. Bausatz nach Anspruch 1 oder 2, dadurch gekennzeichnet, dass separate Unterkanäle (37, 38, 39), z.B. für Starkstrom, Telekommunikation und Schwachstrom zur Montage im Innern des U-förmigen Profils vorgesehen sind.

4. Bausatz nach Anspruch 3, dadurch gekennzeichnet, dass der Unterkanal oder die Unterkanäle (38) für Starkstrom am Boden (29) des U-förmigen Profils (29) und der Unterkanal oder die Unterkanäle (37, 38) für Telekommunikation und Schwachstrom an einem bzw. am anderen Schenkel (31) des U-förmigen Profils (29) angeordnet werden können.

5. Bausatz nach einem der Ansprüche 2 bis 4, dadurch gekennzeichnet, dass der jeweilige Kasten (14) so bemessen ist, dass er auf drei Seiten von den Unterkanälen (37, 38, 39) umgeben wird.

6. Bausatz nach einem der Ansprüche 1 bis 5, dadurch gekennzeichnet, dass die Enden der Schenkel (31) des U-förmigen Profils (29) nach innen abgewinkelt sind, um einen Befestigungsflansch (33′) für die Kästen (14) und Deckplatten (20 und 24) zu bilden.

7. Bausatz nach Anspruch 6, dadurch gekennzeichnet, dass die Befestigungsflansche (33′) mit in genormten Abständen, z.B. von 30 mm, voneinander angeordneten Befestigungslöchern (35) versehen sind.

8. Bausatz nach einem der Ansprüche 1 bis 7, dadurch gekennzeichnet, dass die Teilstücke (15 bis 19) und/oder die Unterkanäle (37, 38, 39) aus Metallblech, z.B. aus verzinktem Eisenblech oder aus Aluminiumblech, bestehen.

9. Bausatz nach einem der Ansprüche 1 bis 8, dadurch gekennzeichnet, dass die Teilstücke (15 bis 19) genormt sind.

10. Bausatz nach einem der Ansprüche 1 bis 9, dadurch gekennzeichnet, dass ein relativ langes Teilstück als Basisstück (16) dient, dass gegebenenfalls über dem Basisstück (16) ein oder mehrere Teilstücke als Ergänzungsstücke (17) angeordnet werden können und dass als weiteres Teilstück ein Anschlussstück (18) mit einem Flansch (52) zur Befestigung an einer Decke vorgesehen ist, wobei das Anschlussstück (18) teleskopisch in das darunter angeordnete Teilstück (17) eingreifen kann.

11. Bausatz nach Anspruch 10, dadurch gekennzeichnet, dass das Anschlussstück (18) eine Kabeldurchschlauföffnung (55) aufweist, die durch einen Abgangskanal (53) und/oder einen Deckel (57) verschliessbar ist.

12. Bausatz nach einem der Ansprüche 1 bis 11, dadurch gekennzeichnet, dass mindestens ein Teilstück (19) als Durchführungsstück für die Deckendurchführung ausgebildet ist und die Form eines rechteckigen Rohrs aufweist.

13. Bausatz nach Anspruch 12, dadurch gekennzeichnet, dass das Durchführungsstück (19) auf einer Seite eine Oeffnung (65) zur Verbindung mit einem in die Decke einbaubaren Schlaufkasten (63) aufweist.

14. Bausatz nach Anspruch 12 oder 13, dadurch gekennzeichnet, dass beim Durchführungsstück (19) für den Raum zwischen den Unterkanälen eine feuersichere Abschottung vorgesehen ist.

15. Bausatz nach einem der Ansprüche 12 bis 14, dadurch gekennzeichnet, dass das Durchführungsstück (19) länger ist als die übliche Deckenstärke.

16. Bausatz nach Anspruch 15, dadurch gekennzeichnet, dass ein Sockel (15) vorgesehen ist, welcher auf das Durchführungsstück (19) geschoben werden kann.

17. Bausatz nach Anspruch 16, dadurch gekennzeichnet, dass der Sockel (15) innen in einem vorbestimmten Abstand von der Unterseite einen Absatz aufweist, auf den das Basisstück (16) gesetzt werden kann.

18. Bausatz nach einem der Ansprüche 12 bis 16, dadurch gekennzeichnet, dass das Durchführungsstück (19) oben einen Flansch (45) aufweist (Fig. 8).

19. Bausatz nach Anspruch 18, dadurch gekennzeichnet, dass ein Befestigungsstutzen (49) vorgesehen ist, der auf das Durchführungsstück (19) oder den Sockel (15) aufgesetzt werden kann, um das Basisstück (16) aufzunehmen (Fig. 8, 9).

20. Bausatz nach einem der Ansprüche 12 bis 19, dadurch gekennzeichnet, dass das Durchführungsstück (19) und/oder der Schlaufkasten (63) einen wegnehmbaren Kern aus Schaumkunststoff aufweisen.

21. Bausatz nach Anspruch 20, dadurch gekennzeichnet, dass der Kern des Schlaufkastens Löcher zum Einführen der Leitungsrohre (69) aufweist.

22. Bausatz nach Anspruch 12 und 13, dadurch gekennzeichnet, dass das Durchführungsstück (19) und der Deckenschlaufkasten (63) eine Baueinheit sind.

23. Verwendung eines Bausatzes gemäss einem der Ansprüche 1 - 22 zur Herstellung von Kanälen und Kästen für die Haustechnik.

## Claims

1. Kit of parts for constructing channels and boxes in buildings, said kit comprising U-profile parts (16,17) of different lengths and at least one door (37,38,39) and/or cover plate (20,24) to close the opening of the U, and a further part (18) capable of telescopically engaging a part (16,17).

2. Kit as in claim 1, characterized in that boxes (14), e.g. distribution boxes, are provided for inserting into the opening of the U.

3. Kit as in claim 1 or 2, characterized in that separate subchannels (37,38,39) for example for electric power, telecommunication and low voltage are provided for being mounted in the interior of the U-profile.

4. Kit as in claim 3, characterized in that the subchannel or the subchannels (38) for electric power can be mounted on the bottom (29) of the U-profile (29), and the subchannel or the subchannels (37,38) for telecommunication and low voltage at one or the other arm (31) of the U-profile (29).

5. Kit as in one of the claims 2 to 4, characterized in that each box (14) is dimensioned to be enclosed on three sides by the subchannels (37, 38, 39).

6. Kit as in one of the claims 1 to 5, characterized in that the ends of the arms (31) of the U-profile (29) are bent inwardly to form a mounting flange (33') for the boxes (14) and the cover plates (20 and 24).

7. Kit as in claim 6, characterized in that the mounting flanges (33') are provided with mounting holes (35) spaced at normed distances of e.g. 30 mm.

8. Kit as in one of the claims 1 to 7, characterized in that the parts (15 to 19) and/or the subchannels (37,38,39) are of sheet metal, e.g. of galvanized iron or of aluminium.

9. Kit as in of the claims 1 to 8, characterized in that the parts (15 to 19) are normed.

10. Kit as in of the claims 1 to 9, characterized in that a relatively long part serves as base part (16), that eventually one or more parts can be mounted as additional parts (17) over the base part (16) and in that a further part is provided as connecting part (18) having a flange (52) for connection to the ceiling, said connecting part (18) being capable of telescopically engaging into the part (17) located underneath.

11. Kit as in claim 10, characterized in that the connecting part (18) comprises a cable receiving opening (55) which can be closed by a secondary channel (53) and/or a cover (57).

12. Kit as in of the claims 1 to 11, characterized in that at least one part (19) is provided as a lead-through for an opening in the ceiling and has the form of a rectangular tube.

13. Kit as in claim 12, characterized in that the lead-through (19) has on one side an opening (65) for connection to cable receiving box (63) which is capable of being mounted in the ceiling.

14. Kit as in claim 12 or 13, characterized in that on the lead-through (19) a fire-proof barrier is provided for the room between the subchannels.

15. Kit as in one of the claims 12 to 14, characterized in that the lead-through (19) is longer than the usual thickness of the ceiling.

16. Kit as in claim 15, characterized in that a socket (15) is provided which can be pushed on the lead-through (19).

17. Kit as in claim 16, characterized in that at a predetermined distance from the bottom the socket (15) is provided with a flange on which the base member (16) can be put.

18. Kit as in of the claims 12 to 16, characterized in that the lead-through (19) is provided with a flange (45) at the top (Fig.8).

19. Kit as in claim 18, characterized in that a mounting flange (49) is provided which can be put on the lead-through (19) or the socket (15) to receive the base member (16) (Figs. 8,9).

20. Kit as in of the claims 12 to 19, characterized in that the lead-through (19) and/or the cable receiving box (63) are provided with a removable core of foamed plastics.

21. Kit as in claim 20, characterized in that the core of the cable receiving box is provided with holes to receive the cable conduits (69).

22. Kit as in claim 12 or 13, characterized in that the lead-through (19) and the cable receiving box (63) are a building unit.

23. Utilisation of a kit according to one of the claims 1 to 22 for building channels and boxes for installations in buildings.

## Revendications

1. Ensemble modulaire pour la fabrication de conduits et de coffrets pour la technique du bâtiment, cet ensemble modulaire comprenant des tronçons (16, 17) de longueurs différentes avec un profil en forme de U, et au moins une porte (37, 38, 39) et/ou une plaque de fermeture (20, 24) pour obturer l'ouverture du U, et un autre tronçon (18) qui peut pénétrer de manière télescopique dans un tronçon (16, 17).

2. Ensemble modulaire selon la revendication 1, caractérisé en ce que des coffrets (14), par exemple des coffrets de distribution, sont prévus pour mise en place dans l'ouverture du U.

3. Ensemble modulaire selon la revendication 1 ou 2, caractérisé en ce que des sous-conduits (37, 38, 39) séparés, par exemple pour lignes de courant fort, pour lignes de télécommunication et pour lignes de courant faible, sont prévus être montés à l'intérieur du profil en U.

4. Ensemble modulaire selon la revendication 3, caractérisé en ce que le sous-conduit ou les sous-conduits (38) pour lignes de courant fort peuvent être disposés au fond (29) du profil en U (29) et le sous-conduit ou les sous-conduits (37, 38) pour lignes de télécommunication et pour lignes de courant faible peuvent être disposés respectivement contre une aile ou contre l'autre aile (31) du profil en U (29).

5. Ensemble modulaire selon l'une quelconque des revendications 2 à 4, caractérisé en ce que chaque coffret (14) est dimensionné de telle manière qu'il est entouré sur trois côtés par les sous-conduits (37, 38, 39).

6. Ensemble modulaire selon l'une quelconque des revendications 1 à 5, caractérisé en ce que les extrémités des ailes (31) du profil en U (29) sont repliées vers l'intérieur pour former un rebord de fixation (33') pour les coffrets (14) et les plaques de fermeture (20 et 24).

7. Ensemble modulaire selon la revendication 6, caractérisé en ce que les rebords de fixation (33') sont munis de trous de fixation (35) disposés avec des écarts normalisés, par exemple de 30 mm, entre eux.

8. Ensemble modulaire selon l'une quelconque des revendications 1 à 7, caractérisé en ce que les tronçons (15 à 19) et/ou les sous-conduits (37, 38, 39) sont en tôle métallique, par exemple en tôle de fer zinguée ou en tôle d'aluminium.

9. Ensemble modulaire selon l'une quelconque des revendications 1 à 8, caractérisé en ce que les tronçons (15 à 19) sont normalisés.

10. Ensemble modulaire selon l'une quelconque des revendications 1 à 9, caractérisé en ce qu'un tronçon relativement long sert d'élément de base (16), en ce que le cas échéant un ou plusieurs tronçons peuvent être disposés au-dessus de l'élément de base (16), en tant qu'éléments complémentaires (17), et en ce qu'il est prévu, en tant que tronçon supplémentaire, un élément de raccordement (18) avec un rebord (52) pour la fixation sur un plafond, l'élément de raccordement (18) pouvant pénétrer de manière télescopique dans le tronçon (17) situé au-dessous.

11. Ensemble modulaire selon la revendication 10, caractérisé en ce que l'élément de raccordement (18) présente une ouverture de passage de câbles (55) qui peut être obturée par un conduit de sortie (53) et/ou par un couvercle (57).

12. Ensemble modulaire selon l'une quelconque des revendications 1 à 11, caractérisé en ce qu'au moins un tronçon (19) est conçu sous forme d'élément de traversée pour la traversée du plafond et présente la forme d'un tuyau rectangulaire.

13. Ensemble modulaire selon la revendication 12, caractérisé en ce que l'élément de traversée (19) présente sur un côté une ouverture (65) pour raccordement à un coffret de passage (63) pouvant être encastré dans le plafond.

14. Ensemble modulaire selon la revendication 12 ou la revendication 13, caractérisé en ce que, dans le cas de l'élément de traversée (19), il est prévu un cloisonnement à l'épreuve du feu pour l'espace entre les sous-conduits.

15. Ensemble modulaire selon l'une quelconque des revendications 12 à 14, caractérisé en ce que l'élément de traversée (19) est plus long que les épaisseurs courantes de plafond.

16. Ensemble modulaire selon la revendication 15, caractérisé en ce qu'il est prévu un socle (15) qui peut être glissé sur l'élément de traversée (19).

17. Ensemble modulaire selon la revendication 16, caractérisé en ce que le socle (15) présente à l'intérieur, à une distance prédéterminée de la face inférieure, un épaulement sur lequel l'élément de base (16) peut être placé.

18. Ensemble modulaire selon l'une quelconque des revendications 12 à 16, caractérisé en ce que l'élément de traversée (19) présente un rebord (45) en haut (figure 8).

19. Ensemble modulaire selon la revendication 18, caractérisé en ce qu'il est prévu un manchon de fixation (49) qui peut être posé sur l'élément de traversée (19) ou sur le socle (15) pour recevoir l'élément de base (16) (figures 8, 9).

20. Ensemble modulaire selon l'une quelconque des revendications 12 à 19, caractérisé en ce que l'élément de traversée (19) et/ou le coffret de passage (63) présentent un coeur amovible en matière plastique mousse.

21. Ensemble modulaire selon la revendication 20, caractérisé en ce que le coeur du coffret de passage présente des trous pour l'introduction des tubes de conduite (69).

22. Ensemble modulaire selon les revendications 12 et 13, caractérisé en ce que l'élément de traversée (19) et le coffret de passage (63) de plafond constituent une unité modulaire.

23. Utilisation d'un ensemble modulaire selon l'une quelconque des revendications 1 à 22 pour la fabrication de conduits et de coffrets pour la technique du bâtiment.
